# EUROPÄISCHE PATENTSCHRIFT

(11) **EP 2 288 197 B1**
(45) Veröffentlichungstag und Bekanntmachung des Hinweises auf die Patenterteilung: **04.01.2017**
(21) Anmeldenummer: 10192177.3
(22) Anmeldetag: 19.11.2004
(51) Int. Cl.: H04W 24/02, H04W 24/08, H04W 16/18, H04W 36/00, H04W 64/00

(54) **Verfahren zum Erzeugen von ortsspezifischen Informationsdaten**
Method for generating a dynamic cellular planning and a method for generating location specific information
Procédé pour élaborer un plan cellulaire dynamique et un procédé pour produire des informations localisées

(30) Priorität: 25.11.2003 DE 10354922
(43) Veröffentlichungstag der Anmeldung: 23.02.2011
(62) Teilanmeldung aus: 04027545.5
(73) Patentinhaber: Vodafone GmbH, 40549 Düsseldorf (DE)
(72) Erfinder: Alger, Dr., Michael, 85540, Haar (DE)
(74) Vertreter: Müller & Schubert

(56) Entgegenhaltungen:
- WO-A-00/28759
- WO-A1-03/024132
- DE-A1- 10 149 943

## Beschreibung

Die vorliegende Erfindung betrifft ein Verfahren zum Erzeugen von ortsspezifischen Informationsdaten gemäß dem Oberbegriff von Patentanspruch 1. Darüber hinaus betrifft die Erfindung auch ein System zum Erzeugen von Informationsdaten.

Zellulare Kommunikationsnetze sind beispielsweise in Form zellularer Mobilfunknetze bekannt. Bei einem bekannten Mobilfunknetz handelt es sich um das sogenannte GSM-Netz (Global Systems for Mobil Communications). Bei einem Mobilfunknetz ist die geographische Fläche in eine Anzahl von Zellen unterteilt, wobei jeder Zelle eine Feststation, eine sogenannte Basisstation, zugeordnet ist. Die einzelnen Basisstationen sind über sogenannte "Base Station Controller (BSC)" mit Funkvermittlungsstellen verbunden, den sogenannten "Mobile Switching Centers (MSC)". Wenn sich in einer Zelle aktive oder in einem Stand-By-Modus befindliche mobile Endeinrichtungen befinden, so werden zumindest zeitweilig Zellinformationsdaten von der entsprechenden Zelle an die mobilen Endeinrichtungen übertragen und dort zumindest zeitweilig abgelegt. Auf diese Weise verfügen die mobilen Endeinrichtungen immer über Informationen betreffend der entsprechenden Zellen in denen sie sich gerade befinden. Wenn es sich bei dem zellularen Kommunikationsnetz um ein Mobilfunknetz und bei den mobilen Endeinrichtungen um Mobiltelefone handelt, entspricht ein Stand-By-Modus einem Zustand, indem die Geräte zwar eingeschaltet sind, jedoch nicht telefoniert wird. Als "aktiv" wird ein Zustand bezeichnet, wenn ein Telefonat geführt wird.

Bei einem Zell-Wechsel-Vorgang (auch Handover-Vorgang genannt), bei dem sich eine mobile Endeinrichtung aus einer Zelle heraus in eine nächste, benachbarte Zelle bewegt, bei der es sich dann um eine Eintrittszelle handelt, werden der mobilen Endeinrichtung auch von dieser Eintrittszelle Zellinformationsdaten übertragen und zumindest zeitweilig abgelegt.

Die einzelnen Zellen sind beim Betreiber des Kommunikationsnetzes mit unterscheidungskräftigen Kennzeichnungen/ Namen versehen, sodass jede Zelle anhand ihrer Kennzeichnung eindeutig identifiziert werden kann. Die einzelnen Zellen sind in einem sogenannten Zellenplan zusammengefasst, wobei ein solcher Zellenplan tabellarisch und/oder auf geographischen Daten basierend vorliegen kann. Auf diese Weise kann jeder einzelnen Zelle zusätzlich zu der sie charakterisierenden Kennzeichnung auch eine eindeutige geographische Position zugeordnet werden. Weiterhin ist es möglich, die einzelnen Zellen mit zusätzlichen Informationen zu verknüpfen.

In jüngster Zeit sind eine Reihe von neuen Servicedienstleistungen entwickelt worden, die auf der Technologie der zellulare Kommunikationsnetze basieren. So ist es beispielsweise möglich, ortsspezifische Informationsdaten zu erzeugen, die anschließend bestimmten Diensten, beispielsweise den sogenannten Location-Based-Services (LBS) zur Verfügung gestellt werden können.

Wenn es sich bei dem zellularen Kommunikationsnetz um ein Mobilfunknetz und bei den mobilen Endeinrichtungen um Mobiltelefone handelt, und wenn diese mobilen Endeinrichtungen aktiv sind, werden von den Mobiltelefonen zumindest zeitweilig spezifische Daten an diejenige Basisstation übertragen, in deren Zelle sich die Mobiltelefone gerade befinden. Bei einem Zell-Wechsel-Vorgang, bei dem sich das aktive Mobiltelefon aus einer Zelle heraus in eine nächste, benachbarte Zelle bewegt, wird ein Verbindungsaufbau zwischen Mobiltelefon und der nächsten Zelle, bei der es sich in diesem Fall dann um eine Eintrittszelle handelt, erzeugt. Dabei werden wiederum spezifische Daten der aktiven Mobiltelefone an die Basisstation dieser nächsten Zelle übertragen. Wenn sich das Mobiltelefon in einem Stand-By-Modus befindet, werden keine spezifischen Daten an die Basisstation übertragen. Allerdings liegen diese Daten im Mobiltelefon vor.

Aus dieser Prozedur heraus sind bereits Verfahren bekannt geworden, wie ein solcher Handover-Vorgang für die Schaffung von bestimmten Diensten genutzt werden kann.

Eine diesbezüglich bekannte Lösung zur Erzeugung von Informationsdaten auf der Basis von in einem zellularen Kommunikationsnetz erzeugten spezifischen Daten mobiler Endeinrichtungen ist beispielsweise in der DE 101 49 943 A1 beschrieben. Bei dieser Lösung werden spezifische Daten wenigstens einer mobilen Endeinrichtung erfasst und in einer zentralen Rechnereinheit bearbeitet. Auf diese Weise können Informationsdaten bezüglich wenigstens einer Zelle des Kommunikationsnetzes erzeugt werden. Bei diesem bekannten Verfahren wird die Fortbewegungszeit wenigstens einer mobilen Endeinrichtung zwischen einem Ausgangspunkt und einem räumlich davon getrennten Endpunkt ermittelt. Dazu werden die spezifischen Daten wenigsten einer am Ausgangspunkt und am Endpunkt befindlichen mobilen Endeinrichtung ermittelt und jeweils mit einer Zeitmarke verknüpft. Die spezifischen Informationen der mobilen Endeinrichtungen werden in wenigstens einer zentralen Rechnereinheit elektronisch miteinander verglichen. Bei Übereinstimmung der spezifischen Daten einer mobilen Endeinrichtung am Ausgangspunkt sowie am Endpunkt wird in der zentralen Rechnereinheit elektronisch die Zeitdifferenz zwischen den Zeitmarken gebildet und daraus die Fortbewegungszeit ermittelt. Auf diese Weise kann die Fortbewegungszeit der mobilen Endeinrichtung ermittelt werden, ohne dass dafür eine spezielle Infrastruktur erforderlich wäre.

Ebenso ist es möglich, mit einem entsprechenden Verfahren zum Erzeugen von ortsspezifischen Informationsdaten eine Verkehrsdatenerfassung durchzuführen. Die Verkehrsdatenerfassung mit Hilfe eines Mobilfunknetzes erfolgt im Wesentlichen durch die Auswertung der spezifischen Daten der mobilen Endeinrichtungen, bei denen es sich beispielsweise um Signalisierungsdaten auf dem Abis-Interface des GSM-Netzes handeln kann. Die räumliche Zuordnung der erfassten Zellinformationsdaten beziehungsweise der Handover-Informationsdaten zu Straßensegmenten erfolgt bisher manuell durch entsprechende Auswahl der Zellen und durch eine entsprechende Darstellung derselben in einer geeigneten Tabelle. In dieser Tabelle sind die einzelnen Zellen entsprechenden Straßensegmenten zugeordnet.

Die Erstellung solcher Tabellen stellt einen signifikanten Arbeitsaufwand dar. In der Praxis hat sich zudem herausgestellt, dass eine solche Zuordnung ständigen Änderungen unterliegt. Konkret müssen ständig die Orte der Zellwechsel mit den Bezeichnungen der genutzten Zellen auf dem Straßennetz ermittelt und eingepflegt werden. Wenn heute zum Beispiel bei Kilometer 17 der A99 ein Handover von Zelle A nach B stattfindet, so kann dies morgen, beispielsweise durch Wetter- oder Laständerungen, beim Kilometer 17,9 sein. Auch ist es denkbar, dass einzelne Zellen vorübergehend abgeschaltet werden. So ist es im Zusammenhang mit dem beschriebenen Beispiel etwa denkbar, dass eine vorübergehende Abschaltung der Zelle B durch ein Handover von Zelle A nach Zelle C bei Kilometer 23,4 ersetzt werden muss.

Diese ständigen Änderungen machen eine aufwendige, zeitnahe und manuelle Pflege der entsprechenden Tabellen beziehungsweise Zellenpläne erforderlich.

In der WO 00/28759 A1 wird ein aus zwei Phasen bestehendes Verfahren beschrieben, mit dem ein Netzwerkplan erzeugt und aktualisiert werden kann. Die Grundlage bei dieser bekannten Lösung besteht darin, dass für eine mobile Endeinrichtung zunächst ein Handover-Request gestartet wird. Dieser Hndover-Request wird verifiziert. Basierend auf der Verifizierung erfolgt eine Positionsbestimmung der mobilen Endeinrichtung. Damit können die Orte das Handovers erkannt und gelernt werden, woraus sich in Verbindung mit den Positionsdaten eine Netzwerkkarte erstellen lässt. Während einer Lernphase wird ein Handover-Request von der mobilen Endeinrichtung initiiert. Im Moment des aktiven Handover-Requests wird der Ort, an dem sich die mobile Endeinrichtung befindet, gespeichert. Daraus entsteht eine Netzwerkkarte. Danach erfolgt eine Maintenance-Phase.. Dazu wird für eine bestimmte Prozentzahl von mobilen Endeinrichtungen der Ort, an dem ein Handover-Request erfolgt, geprüft. Kommt es zu Abweichungen mit der bestehenden Netzwerkkarte, wird eine erneute Lernphase initiiert. In allen Fällen ist aber zunächst der Handover-Request erforderlich.

In der WO 03/024132 A1 wird eine Lösung beschrieben, mit der Verkehrsinformationen unter Verwendung von Mobiltelefonen bereitgestellt werden. Die bekannte Lösung verwendet Ortsdaten aus dem Netzwerk, beispielsweise Handoverdaten, und kombiniert diese mit computerisierten Straßenkarten.

Aufgabe der Erfindung ist es daher, ein verbessertes Verfahren zum Erzeugen von Informationsdaten bereitzustellen, mit dem die zuvor beschriebenen Nachteile umgangen werden können. Weiterhin soll ein verbessertes System bereitgestellt werden.

Diese Aufgabe wird erfindungsgemäß gelöst durch das Verfahren zum Erzeugen von ortsspezifischen Informationsdaten mit den Merkmalen gemäß dem unabhängigen Patentanspruch 1 sowie das System zum Erzeugen von Informationsdaten mit den Merkmalen gemäß dem unabhängigen Patentanspruch 4. Weitere Vorteile, Merkmale, Details und Aspekte der Erfindung ergeben sich aus den Unteransprüchen, der Beschreibung sowie den Zeichnungen. Merkmale und Details, die im Zusammenhang mit dem erfindungsgemäßen Verfahren beschrieben sind, gelten dabei selbstverständlich auch im Zusammenhang mit dem erfindungsgemäßen System, und umgekehrt.

Gemäß einem bevorzugten Aspekt wird ein Verfahren zum Erzeugen/Aktualisieren eines dynamischen Zellenplans eines zellularen Kommunikationsnetzes bereitgestellt, wobei das Kommunikationsnetz aus einer Anzahl von Zellen gebildet ist, die in einem Zellenplan zusammengefasst sind, wobei in einer Zelle befindlichen aktiven oder in einem Stand-By-Modus befindlichen mobilen Endeinrichtungen zumindest zeitweilig Zellidentifikationsdaten von der Zelle übertragen und zumindest zeitweilig in den mobilen Endeinrichtungen abgelegt werden und wobei bei einem Zellenwechsel der mobilen Endeinrichtungen in diesen von der Eintrittszelle übertragene Zellidentifikationsdaten zumindest zeitweilig abgelegt werden.

Das Verfahren ist dadurch gekennzeichnet, dass in vorgegebenen Zeitabständen die in den mobilen Endeinrichtungen abgelegten Zellidentifikationsdaten ausgelesen werden, dass zumindest bei einer Änderung der ausgelesenen Zellidentifikationsdaten mittels eines Standort-Ermittlungsverfahrens die genaue Position der mobilen Endeinrichtung ermittelt wird, wobei die Änderung der Zellidentifikationsdaten dem Ort eines Zellenwechsels entspricht, und dass aus den so ermittelten Zellwechselortsdaten der Zellenplan automatisch erzeugt/aktualisiert wird.

Zunächst ist vorgesehen, dass das Verfahren in einem zellularen Kommunikationsnetz durchgeführt wird. Dabei ist die Erfindung jedoch nicht auf bestimmte Typen zellularer Kommunikationsnetze beschränkt. Besonders vorteilhaft kann das Verfahren jedoch unter Verwendung eines zellularen Mobilfunknetzes durchgeführt werden, wobei in einem solchen Fall die mobilen Endgeräte zumindest eine Mobilfunkkomponente umfassen. Dabei ist die Erfindung nicht auf bestimmte Arten von mobilen Endeinrichtungen beschränkt. Einige nicht ausschließliche Beispiele hierzu werden im weiteren Verlauf der Beschreibung näher erläutert.

Das Verfahren kann sowohl zur Erzeugung eines dynamischen Zellenplans als auch zu dessen Aktualisierung herangezogen werden. Basis hierbei bilden Zellidentifikationsdaten, die von einer Zelle an die mobilen Endeinrichtungen übertragen und dort zumindest zeitweilig abgelegt beziehungsweise abgespeichert werden. Bei den Zellidentifikationsdaten handelt es sich erfindungsgemäß um solche Daten, die eine genaue Identifizierung der Zelle möglich machen. Hierbei kann es sich beispielsweise um Daten zur Kennzeichnung der Zelle und dergleichen handeln, etwa um deren Nummerierung.

Das Verfahren ist nunmehr in der Lage, den Zellenplan eines zellularen Kommunikationsnetzes automatisch zu erzeugen und zu aktualisieren, wobei insbesondere die Aktualisierung dynamisch erfolgen kann. Dabei kann insbesondere dem Umstand Rechnung getragen werden, dass sich der Ort eines Zellenübergangs von einer Zelle in eine benachbarte nächste Zelle über die Zeit verändern kann.

Zunächst ist vorgesehen, dass zumindest zeitweilig die in den mobilen Endeinrichtungen abgelegten Zellidentifikationsdaten ausgelesen werden.

Dabei ist vorgesehen, dass die Zellidentifikationsdaten in vorgegebenen Zeitabständen aus den mobilen Endeinrichtungen ausgelesen werden. Beispielhaft könnte denkbar sein, dass die Zellidentifikationsdaten in regelmäßigen Abständen von beispielsweise etwa einer halben Sekunde aus den mobilen Endeinrichtungen ausgelesen werden. Natürlich handelt es sich dabei nur um ein Beispiel, sodass auch andere Zeitabstände vorgegeben werden können. Ebenso ist es natürlich auch denkbar, dass die Zellidentifikationsdaten permanent aus den Endeinrichtungen ausgelesen werden.

Zumindest dann, wenn sich die ausgelesenen Zellidentifikationsdaten ändern, wird mittels eines Standort-Ermittlungsverfahrens die genaue Position der mobilen Endeinrichtung ermittelt. Dabei ist die Erfindung nicht auf bestimmte Arten von Standort-Ermittlungsverfahren beschränkt. Einige nicht ausschließliche Beispiele hierzu werden im weiteren Verlauf der Beschreibung näher erläutert.

Wie weiter oben bereits beschrieben wurde, werden die Zellidentifikationsdaten einer Zelle, in der sich eine mobile Endeinrichtung gerade befindet, zumindest zeitweilig auf die entsprechende mobile Endeinrichtung übertragen und dort zumindest zeitweilig abgelegt. Wenn sich diese Zellidentifikationsdaten ändern, bedeutet dies, dass die mobile Endeinrichtung eine Zelle verlässt beziehungsweise verlassen hat und in eine nächste Zelle, eine sogenannte Eintrittszelle, hinüberwechselt. Die Änderungen der Zellidentifikationsdaten entsprechen somit einem Handover-Vorgang der mobilen Endeinrichtung zwischen zwei Zellen. Aus diesem Grund entspricht eine Änderung der Zellidentifikationsdaten dem geographischen Ort eines Zellenwechsels.

Wenn folglich bei einer Änderung der ausgelesenen Zellidentifikationsdaten gleichzeitig auch die Position der mobilen Endeinrichtung ermittelt wird, bedeutet dies, dass die ermittelte Position dem Übergang zwischen zwei Zellen und damit der Grenze zwischen den beiden Zellen entspricht. Auf diese Weise kann unabhängig von den jeweiligen äußeren Einflüssen immer genau ermittelt werden, wo sich die aktuelle Grenze zwischen zwei benachbarten Zellen befindet.

Aus den auf diese Weise ermittelten Zellwechselortsdaten kann der Zellenplan automatisch erzeugt/aktualisiert werden
Die Erfassung der jeweiligen Position der mobilen Endeinrichtungen erfolgt immer dann, wenn auch tatsächlich eine Änderung der Zellidentifikationsdaten registriert wird. Ebenso kann natürlich auch Beispielsweise vorgesehen sein, dass eine Positionserfassung in regelmäßigen Abständen oder gar kontinuierlich erfolgt.

Je häufiger ein Auslesen der Zellidentifikationsdaten aus den mobilen Endeinrichtungen sowie eine Ermittlung der genauen Position der mobilen Endeinrichtungen erfolgt, desto schneller kann eine Änderung der Zellgeometrien beziehungsweise Zellgrößen - etwa aufgrund äußerer Bedingungen - festgestellt werden. Meistens ist es jedoch ausreichend, wenn ein Auslesen der Zellinformationsdaten aus den mobilen Endeinrichtungen nicht kontinuierlich, sondern in regelmäßigen Abständen und eine Positionserfassung nur bei tatsächlich erkannten Änderungen der Zellinformationsdaten erfolgt.

Auftretende Änderungen innerhalb des Zellenplans können mit dem Verfahren automatisch erkannt und berücksichtigt werden, wobei der Zellenplan automatisch erzeugt/aktualisiert wird und den vorherrschenden reellen Bedingungen auch tatsächlich entspricht. Eine wie bisher erforderliche manuelle

Erzeugung/Aktualisierung des Zellenplans mit den einhergehenden Nachteilen kann mit dem erfindungsgemäßen Verfahren nunmehr vermieden werden.

Beispielsweise kann vorgesehen sein, dass die Zellidentifikationsdaten automatisch aus den mobilen Endeinrichtungen ausgelesen werden. Ebenso ist es denkbar, dass die Zellidentifikationsdaten nur auf Anforderung (On-Demand) einer zusätzlichen Instanz, etwa einer Auswertereinrichtung in Form einer Rechnereinheit oder dergleichen, ausgelesen werden. Die letztgenannte Variante hat den Vorteil, dass die Verbindungskosten zwischen der mobilen Endeinrichtung und derjenigen Instanz, in der die ausgelesenen Zellidentifikationsdaten letztendlich zum dynamischen Zellenplan verarbeitet werden, möglichst gering gehalten werden können. Auf diese Weise kann das Verfahren beispielsweise dann aktiviert werden, wenn ein tatsächlicher Bedarf an neuen Informationen besteht, sodass die Kommunikationskosten gering gehalten werden können. Das Verfahren wird dann nur bei eintretenden oder geplanten Änderungen aktiviert, während es in einer Zeit ohne Änderungen deaktiviert bleibt.

Vorteilhaft kann vorgesehen sein, dass bei einer Änderung der ausgelesenen Zellidentifikationsdaten gleichzeitig auch der Zeitpunkt der Änderung der ausgelesenen Zellidentifikationsdaten mitbestimmt wird.

Wie weiter oben bereits dargelegt wurde, ist die Erfindung nicht auf bestimmte Standort-Ermittlungsverfahren zur Bestimmung der jeweils genauen Position der mobilen Endeinrichtungen beschränkt. Vielmehr ergeben sich geeignete Standort-Ermittlungsverfahren jeweils aus der entsprechenden Ausgestaltung der mobilen Endeinrichtungen beziehungsweise des Kommunikationsnetzes. So ist es beispielsweise möglich, die Positionsdaten der mobilen Endeinrichtungen mittels eines satellitengestützten Standort-Ermittlungsverfahrens (etwa GPS) zu ermitteln. In einem solchen Fall ist es erforderlich, dass die mobilen Endeinrichtungen auch über ein entsprechendes Modul verfügen, das eine solche Positionsbestimmung zulässt. Wenn die mobilen Endeinrichtungen auch eine Mobilfunkkomponente beinhalten, könnten die Positionsdaten beispielsweise auch mittels eines GSM-basierten Standort-Ermittlungsverfahrens ermittelt werden.

Zur Ortung mobiler Endeinrichtungen über bestimmte Standort-Ermittlungsverfahren sind bereits verschiedene Lösungen bekannt geworden. So ist in der DE 198 03 960, deren Offenbarungsgehalt in soweit in die Beschreibung der vorliegenden Erfindung mit einbezogen wird, ein Verfahren sowie ein System zur Nutzung von modernen Ortungssystemen in Mobilfunksystemen beschrieben.

Die Ortung eines Mobiltelefons kann beispielsweise auch nach dem sogenannten EOTD-Verfahren (Enhanced Observed Time Difference) erfolgen. Dabei werden Laufzeitunterschiede von Signalen eines Mobiltelefons zu mehreren Sendern gemessen. Aus den ermittelten Werten kann dann unter Verwendung geeigneter Algorithmen automatisch der Standort des Mobiltelefons ermittelt werden.

Bevorzugt weist die mobile Endeinrichtung jedoch Mittel zur satellitengestützten Positionsbestimmung auf, wobei zumindest bei einer Änderung der ausgelesenen Zellidentifikationsdaten mittels eines satellitengestützten Standort-Ermittlungsverfahrens (beispielsweise GPS) die genaue Position der mobilen Endeinrichtung ermittelt wird.

Die Erzeugung beziehungsweise Aktualisierung des Zellenplans erfolgt in einer Weise, dass die ausgelesenen Zellidentifikationsdaten zumindest dann, wenn diese sich ändern, mit ermittelten Positionsdaten der entsprechenden mobilen Endeinrichtungen verknüpft werden. Diese Verknüpfung erfolgt vorteilhaft in einer dafür vorgesehenen Rechnereinheit. Weiterhin kann vorgesehen sein, dass die ausgelesenen Zellidentifikationsdaten und/oder die ermittelten Positionsdaten und/oder die ermittelten Zellwechselortsdaten zumindest temporär in wenigstens einer Speichereinrichtung abgespeichert werden. Dadurch kann erreicht werden, dass die ermittelten beziehungsweise berechneten Daten nicht gleich weiter bearbeitet werden müssen. Außerdem lassen sich auf diese Weise die ermittelten beziehungsweise berechneten Daten über einen längeren Zeitraum sammeln, was retrospektive Betrachtungen und Auswertungen ermöglicht.

Dabei ist die Erfindung nicht auf bestimmte Ausgestaltungsformen im Zusammenhang mit der Rechnereinheit und/oder der Speichereinrichtung beschränkt. Beispielsweise kann vorgesehen sein, dass die Rechnereinheit und/oder die Speichereinrichtung der mobilen Endeinrichtung zugeordnet ist/sind, wobei dann die Zellwechselortsdaten innerhalb der mobilen Endeinrichtung erzeugt werden. In einem solchen Fall können insbesondere die Kommunikationskosten niedrig gehalten werden. Die Zellidentifikationsdaten werden ohnehin in regelmäßigen Abständen auf die mobile Endeinrichtung übertragen und dort zumindest zeitweilig abgelegt beziehungsweise abgespeichert. Die Überprüfung, ob eine Änderung der Zellidentifikationsdaten vorliegt, erfolgt allein in der mobilen Endeinrichtung, sodass für diese keinerlei Veranlassung besteht, mit einer externen Rechnereinheit - was Kommunikationskosten erzeugen würde - zu kommunizieren. Erst dann, wenn auch tatsächlich eine Änderung der Zellidentifikationsdaten erkannt wird, werden in der mobilen Endeinrichtung die entsprechenden Zellwechselortsdaten erzeugt. Diese erzeugten Zellwechselortsdaten werden anschließend zur weiteren Auswertung beziehungsweise zur dynamischen Erzeugung/Aktualisierung des Zellenplans an eine weitere Instanz, beispielsweise eine zentrale Rechnereinheit oder dergleichen, weitergeleitet.

In anderer Ausgestaltung kann vorgesehen sein, dass die Rechnereinheit und/oder der Speichereinrichtung dem Kommunikationsnetz zugeordnet ist/sind, wobei die ausgelesenen Zellidentifikationsdaten und die ermittelten Positionsdaten zur Rechnereinheit übertragen werden und wobei die Zellwechselortsdaten innerhalb der zentralen Rechnereinheit erzeugt werden. Der Vorteil bei dieser Ausgestaltung liegt darin, dass die mobilen Endeinrichtungen relativ einfach ausgestaltet sein können. Diese müssen lediglich in der Lage sein, die entsprechenden Daten auf die zentrale Rechnereinheit zu übertragen. Die Erzeugung der Zellwechselortsdaten aus den erfassten Daten erfolgt dann zentral in einer einzigen Rechnereinheit. Vorteilhaft handelt es sich dabei um diejenige Rechnereinheit, in der auch der Zellenplan erzeugt beziehungsweise aktualisiert wird.

Vorteilhaft kann vorgesehen sein, dass die dynamische Erzeugung/Aktualisierung des Zellenplans in definierten Zeitabständen aus den gespeicherten Zellwechselortsdaten erfolgt. So ist es beispielsweise möglich, dass die ausgelesenen Zellidentifikationsdaten und/oder die ermittelten Positionsdaten und/oder die ermittelten Zellwechselortsdaten zunächst in einer Speichereinrichtung gespeichert werden, und dass diese regelmäßig, beispielsweise zu verkehrsschwachen Zeiten innerhalb des Kommunikationsnetzes an eine zentrale Rechnereinheit, beispielsweise einen zentralen Server, geschickt werden.

Vorteilhaft kann somit vorgesehen sein, dass die erzeugten Zellwechselortsdaten in definierten Zeitabständen zu einer Rechnerzentrale übertragen werden und dass der Zellenplan in der Rechnerzentrale dynamisch erzeugt/aktualisiert wird. Dabei ist vorteilhaft vorgesehen, dass die erzeugten beziehungsweise ermittelten und übertragenen Daten in der Rechnerzentrale datentechnisch konsolidiert und in den entsprechenden Zellenplan eingepflegt werden. Dies erfolgt insbesondere automatisch, sodass die bisher erforderlichen manuellen Arbeitsschritte nunmehr entfallen können.

Wie weiter oben bereits ausgeführt wurde, ist die Erfindung nicht auf bestimmte Typen mobiler Endeinrichtungen beschränkt, mittels derer die Erzeugung/Aktualisierung des Zellenplans erfolgt. Vielmehr ergibt sich die Ausgestaltung der mobilen Endeinrichtungen je nach Ausgestaltung des zellularen Kommunikationsnetzes, nach Art und Weise der verwendeten Standort-Ermittlungsverfahren und dergleichen. Nachfolgend werden einige nicht ausschließliche Beispiele für geeignete mobile Endeinrichtungen beschrieben.

Wenn das Verfahren unter Verwendung eines zellularen Mobilfunknetzes durchgeführt wird, weisen die mobilen Endeinrichtungen vorzugsweise zumindest ein Mobilfunkmodul, beispielsweise ein GSM-Modul auf. Über ein solches GSM-Modul liegt permanent die zu einer bestimmten Zeit empfange Zellinformation vor. Zellidentifikationsdaten, wie beispielsweise Zellennamen und deren Wechsel, liegen in der mobilen Endeinrichtung, beispielsweise im sogenannten "Idle Mode" vor. Ebenso können diese Informationen auch im Kommunikationsnetz im sogenannten "Active Mode" vorliegen.

Beispielsweise kann es sich in einem solchen Fall bei den mobilen Endeinrichtungen auch um Mobiltelefone handeln. Weiterhin kann es sich bei der mobilen Endeinrichtung beispielsweise auch um mobile Computer, PDA's (Personal Digital Assistent) und dergleichen handeln.

Wenn die Erzeugung/Aktualisierung eines dynamischen Zellenplans beispielsweise dazu verwendet wird, um - wie weiter unten noch näher beschrieben wird - Verkehrsinformationsdaten zu erzeugen, kann es sich bei den mobilen Endeinrichtungen für die Erzeugung/Aktualisierung des Zellenplans um telematische Endgeräte in Fahrzeugen handeln, die auf dem Straßennetz unterwegs sind. Das können beispielsweise sogenannte On-Board-Units (OBU's) sein, mit denen mautpflichtige LKW ausgestattet sind. Weiterhin können die mobilen Endeinrichtungen auch als Navigationseinrichtungen in Fahrzeugen, und hier insbesondere in Form von Java-Navigationseinrichtungen, ausgebildet sein.

Nachfolgend wird ein konkretes, nicht ausschließliches Beispiel beschrieben, wie die Daten von den vorstehend genannten Fahrzeugen, die mit telematischen Endeinrichtungen ausgestattet sein können und auf dem Straßennetz unterwegs sind, ausgenutzt werden können, um damit einen Zellenplan des Kommunikationsnetzes dynamisch erzeugen/aktualisieren zu können.

Wenn diese Fahrzeuge beispielsweise mit den sogenannten On-Board-Units oder aber mit Java-Navigationssystemen ausgerüstet sind, führen diese stets ein eingeschaltetes GSM-Endgerät mit sich, mit dem permanent die zur Zeit empfangbare Zellinformation vorliegt. Weiterhin führen diese Fahrzeuge in ihrer mobilen Endeinrichtung beispielsweise einen GPS-Empfänger mit, der zu dieser Zellinformation permanent die tatsächliche Position und die genaue Uhrzeit kennt. Derartige Fahrzeuge fahren auf einer Straße und ermitteln damit in Echtzeit die Orte der Zellenwechsel auf dem Straßennetz.

Über derartige Fahrzeuge lässt sich folglich der Zellenplan des zellularen Kommunikationsnetzes dynamisch erzeugen beziehungsweise aktualisieren, wobei dies insbesondere automatisch erfolgt.

Das wie vorstehend beschriebene Verfahren zum Erzeugen/Aktualisieren eines Zellenplans macht sich den Umstand zu Nutze, dass in den mobilen Endeinrichtungen Zellidentifikationsdaten und/oder spezifische Daten der mobilen Endeinrichtungen vorliegen, dass die Daten über ein Standort-Ermittlungsverfahren, beispielsweise mittels GPS, "verortet" werden und dass der Ort eines Zellwechsels gesammelt und irgendwann übertragen wird. Dies gilt insbesondere auch bei mobilen Endeinrichtungen, die sich in einem Stand-By-Modus befinden. Bei einer aktiven mobilen Endeinrichtung passiert jedoch das Gleiche. Auch hier wird der genaue Ort über ein Standort-Ermittlungsverfahren ermittelt.

Ein entsprechend erzeugter/aktualisierter Zellenplan wird erfindungsgemäß genutzt, um ortsspezifische Informationsdaten zu erzeugen.

Dies wird nachfolgend im Zusammenhang mit dem erfindungsgemäßen Verfahren beschrieben.

Gemäß diesem Aspekt der Erfindung wird ein Verfahren zum Erzeugen von ortsspezifischen Informationsdaten in Form von Verkehrsinformationsdaten auf der Basis von in einem zellularen Kommunikationsnetz erzeugten spezifischen Daten aktiver oder in einem Stand-By-Betrieb befindlicher mobiler

Endeinrichtungenbereitgestellt, wobei das Kommunikationsnetz aus einer Anzahl von Zellen gebildet ist, wobei spezifische Daten der mobilen Endeinrichtungen erfasst werden und wobei die Erzeugung der Informationsdaten auf der Basis der spezifischen Daten der mobilen Endeinrichtungen erfolgt. Das Verfahren ist dadurch gekennzeichnet, dass die spezifischen Daten der Endeinrichtungen mit spezifischen Zellinformationsdaten von Zellen, die eine genaue Identifikation der Zelle möglich machen, in denen sich die mobilen Endeinrichtungen befinden, verknüpft werden, dass die Zellinformationsdaten auf einen dynamischen Zellenplan des Kommunikationsnetzes abgebildet werden, wobei der Zellenplan mittels eines Verfahrens zum Erzeugen/Aktualisieren eines Zellenplans automatisch erzeugt/aktualisiert wird, indem in einer Zelle befindlichen aktiven oder in einem Stand-By-Modus befindlichen mobilen Endeinrichtungen zumindest zeitweilig Zellidentifikationsdaten, die eine genaue Identifikation der Zelle möglich machen, von der Zelle übertragen und zumindest zeitweilig in den mobilen Endeinrichtungen abgespeichert werden, indem bei einem Zellenwechsel der mobilen Endeinrichtungen von der Zelle in eine nächste, benachbarte Eintrittszelle, in den mobilen Endeinrichtungen von der Eintrittszelle übertragene Zellidentifikationsdaten, die eine genaue Identifikation der Eintrittszelle möglich machen, zumindest zeitweilig abgespeichert werden, indem in vorgegebenen Zeitabständen die in den mobilen Endeinrichtungen abgelegten Zellidentifikationsdaten ausgelesen werden, indem dann, wenn sich die ausgelesenen Zellidentifikationsdaten ändern, mittels eines Standort-Ermittlungsverfahrens die genaue Position der mobilen Endeinrichtung ermittelt wird, wobei die Änderung der Zellidentifikationsdaten dem geographischen Ort eines Zellenwechsels entspricht, indem die ausgelesenen Zellidentifikationsdaten dann, wenn sich diese ändern, mit den ermittelten Positionsdaten der mobilen Endeinrichtung verknüpft und daraus Zellwechselortsdaten ermittelt werden und indem aus den so ermittelten Zellwechselortsdaten der Zellenplan automatisch erzeugt/aktualisiert wird, und dass die einzelnen Zellen im dynamischen Zellenplan auf die digitale Karte eines Straßennetzes abgebildet werden.

Wenn das Verfahren im Zusammenhang mit einem zellularen Mobilfunknetz betrieben wird, ist es grundsätzlich möglich, als spezifische Daten der in diesem Fall vorteilhaft als Mobiltelefon ausgebildeten Endeinrichtungen solche Daten zu verwenden, die im Rahmen der grundlegenden Funktionsweise des Mobilfunknetzes ohnehin anfallen. Darunter fallen neben den vorstehend genannten Datentypen auch Echtzeit- und Zellaktivitätsdaten von aktiven mobilen Endeinrichtungen. Diese werden von den jeweiligen Basisstationen empfangen und in der Regel über die BSC's und MSC's zur weiteren Bearbeitung, Archivierung und dergleichen weitergeleitet. Dabei ist es nicht unbedingt erforderlich, dass mittels der Mobiltelefone zur Erfassung von spezifischen Daten gerade auch ein Telefonat geführt werden müsste. Vielmehr reicht es aus, wenn sich ein Mobiltelefon in einem Stand-By-Modus befindet, das heißt, wenn es lediglich eingeschaltet ist. In einem solchen Fall sendet das Mobiltelefon in regelmäßigen Abständen so genannte Registrierungssignale aus, die dann von in der Nähe befindlichen Basisstationen erfasst werden. Dabei handelt es sich um eine grundlegende Funktionsweise eines zellularen Mobilfunknetzes.

Gemäß diesem erfindungsgemäßen Verfahren ist vorgesehen, dass die ermittelten beziehungsweise erfassten spezifischen Daten der Endeinrichtungen mit spezifischen Zellidentifikationsdaten von denjenigen Zellen, in denen sich die mobilen Endeinrichtungen gerade befinden, verknüpft werden. Auf diese Weise wird es zunächst möglich, die mobilen Endeinrichtungen einer bestimmten Zelle zuzuordnen. Dabei ist die Erfindung nicht auf bestimmte spezifische Zellidentifikationsdaten beschränkt, mit denen die spezifischen Daten der Endeinrichtungen verknüpft werden könnten. Beispielsweise kann es sich um die beim ersten Aspekt beschriebenen Zellidentifikationsdaten handeln.

Vorteilhaft kann vorgesehen sein, dass das Verfahren zum dynamischen Erzeugen/Aktualisieren des Zellenplans mit einer Anzahl mobiler Endeinrichtungen durchgeführt wird, die einer Teilmenge der im zellularen Kommunikationsnetz befindlichen mobilen Endeinrichtungen entspricht. Diesbezüglich sind die unterschiedlichsten Realisierungsvarianten des Verfahrens denkbar. So ist es beispielsweise möglich, dass die mobilen Endeinrichtungen, mittels derer der Zellenplan erzeugt/aktualisiert wird, grundsätzlich anders aufgebaut sind und andere Funktionen haben, als die mobilen Endeinrichtungen, die zum Erzeugen der ortsspezifischen Informationsdaten herangezogen werden. In einem solchen Fall haben alle mobilen Endeinrichtungen jedoch gemeinsam, dass sie über zumindest ein Kommunikationsmodul verfügen, mittels dessen sie im Kommunikationsnetz kommunizieren können. Dies soll anhand eines nicht ausschließlichen Beispiels erläutert werden.

So ist es beispielsweise denkbar, dass der dynamische Zellenplan unter Verwendung von mobilen Endeinrichtungen erfolgt, die in Form von On-Board-Units, Navigationssystemen oder dergleichen in Fahrzeugen eingebaut sind. Die Erzeugung der eigentlichen Informationsdaten kann jedoch mit Hilfe von mobilen Endeinrichtungen erfolgen, die im Falle eines Mobilfunknetzes als Mobiltelefone ausgebildet sein können. Die erstgenannten mobilen Endeinrichtungen haben die Aufgabe, den Zellenplan des Kommunikationsnetzes zu erzeugen beziehungsweise zu aktualisieren, wobei insbesondere aufgrund von äußeren Einflüssen auftretende Änderungen berücksichtigt werden können.

Dieser Zellenplan ist Bestandteil des Verfahrens zum Erzeugen von ortsspezifischen Informationsdaten. Bei diesem Verfahren geht es zunächst darum, die spezifischen Daten der Endeinrichtungen mit spezifischen Zellidentifikationsdaten von Zellen, in denen sich die mobilen Endeinrichtungen gerade befinden, zu verknüpfen. In einem weiteren Verfahrensschritt werden diese Zellidentifikationsdaten anschließend auf den dynamischen Zellenplan des Kommunikationsnetzes abgebildet. Bei diesem Zellenplan handelt es sich jedoch immer um einen solchen, der die aktuellen Gegebenheiten widerspiegelt, sodass mit dem Verfahren stets genau ortsspezifische Informationsdaten erzeugt werden können.

Erfindungsgemäß ist vorgesehen, dass mit dem Verfahren Informationsdaten in Form von Verkehrsinformationsdaten erzeugt werden. So ist es beispielsweise denkbar, dass mit dem Verfahren die Fortbewegungszeit und/oder die Fortbewegungsgeschwindigkeit von Endeinrichtungen durch eine oder mehrere Zelle(n) des Kommunikationsnetzes ermittelt wird. Ebenso ist es möglich, dass mit dem Verfahren Verkehrsinformationen erzeugt werden. Dabei ist die Erfindung jedoch nicht auf bestimmte Arten von Verkehrsinformationen beschränkt. So ist es beispielsweise möglich, Verkehrsinformationen zu erzeugen, die die aktuelle Verkehrslage auf Straßen widerspiegeln. Auch kann das Verfahren als Navigationshilfe eingesetzt werden oder aber als statistische Grundlage für die Verkehrsplanung - etwa von öffentlichen Stellen - herangezogen werden.

Außerhalb der Erzeugung von Verkehrsinformationsdaten ist es mit dem Verfahren auch möglich, Informationsdaten im Zusammenhang mit sogenannten Location-Based-Services (LBS) oder dergleichen zu erzeugen. Bei einem Location-Based-Service wird zunächst die Position einer Endeinrichtung, für die dieser Dienst angeboten wird, ermittelt. Aufgrund dieser Positionsdaten werden dann ortsspezifische Dienste angeboten, ortsspezifische Interaktionen zwischen Endeinrichtungen und anderen Endeinrichtungen und anderen Einrichtungen durchgeführt und dergleichen.

Vorteilhaft kann dabei vorgesehen sein, dass die einzelnen Zellen im Zellenplan des Kommunikationsnetzes mit Ortsdaten verknüpft sind. Da das Verfahren im Zusammenhang mit Verkehrsinformationsdaten eingesetzt wird, ist erfindungsgemäß vorgesehen, dass die einzelnen Zellen im Zellenplan des Kommunikationsnetzes auf die digitale Karte eines Straßennetzes abgebildet werden.

Durch das Verfahren wird somit ein automatischer Abgleich des die Straßen überdeckenden Teils des tatsächlichen, dynamischen Zellenplans ermöglicht, wobei ein automatischer Betrieb des Verfahrens ohne die manuelle Pflege der Zellenabdeckung ermöglicht wird.

Gemäß noch einem weiteren Aspekt der Erfindung wird ein System zum Erzeugen von Informationsdaten auf der Basis in einem zellularen Kommunikationsnetz erzeugten spezifischen Daten aktiver oder in einem Stand-By-Betrieb befindlicher mobiler Endeinrichtungen bereitgestellt, wobei das Kommunikationsnetz aus einer Anzahl von Zellen gebildet ist und wobei das System Mittel zur Durchführung des wie vorstehend beschriebenen erfindungsgemäßen Verfahrens zum Erzeugen von ortsspezifischen Informationsdaten aufweist.

Weiterhin wird auch ein System zum Erzeugen/Aktualisieren eines dynamischen Zellenplans eines zellularen Kommunikationsnetzes bereitgestellt, wobei das Kommunikationsnetz aus einer Anzahl von Zellen gebildet ist, die in den Zellenplan zusammengefasst sind und wobei das System Mittel zur Durchführung des wie vorstehend beschriebenen erfindungsgemäßen Verfahrens zum Erzeugen/Aktualisieren eines dynamischen Zellenplans aufweist.

Das den beiden vorstehen genannten Systemen zugrundeliegende Kommunikationsnetz ist vorteilhaft als zellulares Mobilfunknetz ausgebildet, wobei in einem solchen Fall die mobilen Endeinrichtungen als Mobiltelefone und/oder als On-Board-Units (OBUs) und/oder als Navigationseinrichtungen in Fahrzeugen ausgebildet sein können. In einem solchen Fall eignen sich die beiden vorstehenden Systeme insbesondere zur Erzeugung von Verkehrsinformationen.

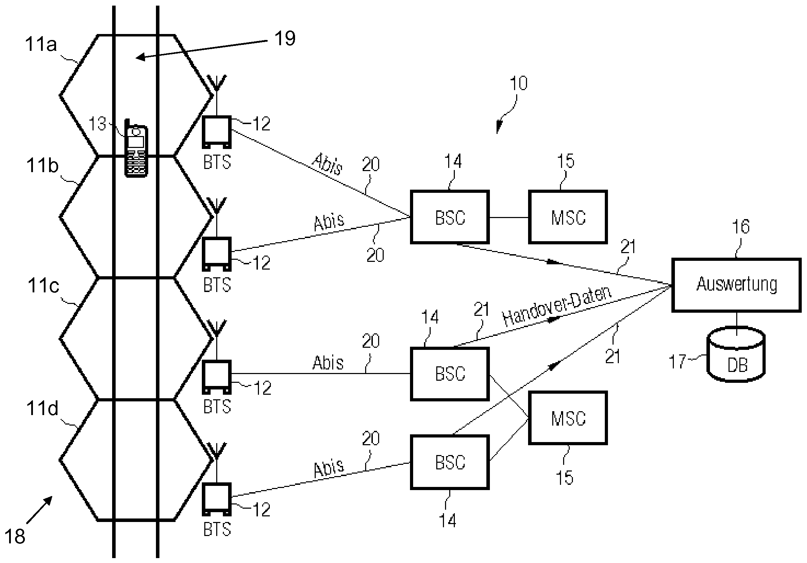

Die Erfindung wird nun anhand eines Ausführungsbeispiels unter Bezugnahme auf die beiliegende Zeichnung näher erläutert. Dabei zeigt die einzige Figur ein erfindungsgemäßes System zum Verfolgen von Zell-Wechsel-Vorgängen mobiler Endeinrichtungen, mittels dessen die erfindungsgemäßen Verfahren durchführbar sind.

In der einzigen Figur ist ein als Mobilfunknetz ausgebildetes zellulares Kommunikationsnetz 10 dargestellt, dessen geographische Fläche in eine Anzahl von Zellen 11 aufgeteilt ist. Im vorliegenden Beispiel sind der besseren Übersicht halber nur vier solcher Zellen 11 a, 11 b, 11 c und 11 d dargestellt. Alle Zellen 11 gemeinsam sind in einem Zellenplan 18 zusammengefasst. Der Zellenplan 18 ist weiterhin einem Straßennetz zugeordnet, wobei im dargestellten Beispiel der Einfachheit halber nur eine einzige Straße 19 dargestellt ist, die durch die Zellen 11a bis 11d verläuft. Die Zuordnung der einzelnen Zellen 11 zu den Segmenten der Straße 19 erfolgt durch eine Darstellung in einer geeigneten Tabelle.

Diese Zuordnung unterliegt in der Praxis ständigen Änderungen, die sich aufgrund äußerer Einflüsse ergeben können. Aus diesem Grund müssen ständig die Orte der Zellwechsel mit den Zellidentifikationsdaten der benutzten Zellen, beispielsweise mit den Bezeichnungen der genutzten Zellen auf dem Straßennetz ermittelt und in die Tabelle eingepflegt werden.

Zur Erzeugung/Aktualisierung des Zellenplans 18 können beispielsweise Daten von Fahrzeugen genutzt werden, die mit telematischen Endgeräten ausgestattet auf dem Straßennetz 19 unterwegs sind. Dies können beispielsweise alle mit On-Board-Units ausgestatteten mautpflichtigen LKW sein oder alle mit Java-Navigationssystemen ausgestatteten PKW. Diese Fahrzeuge haben insbesondere folgende Eigenschaften:

Die Fahrzeuge führen in ihren mobilen Endeinrichtungen ein eingeschaltetes GSM-Endgerät mit sich, in dem permanent die zur Zeit empfangbare Zellinformation vorliegt. Zellennamen und deren Wechsel liegen im Endgerät im "Idle Mode" vor, wie im Kommunikationsnetz 10 im "Active Mode". Weiterhin führen die mobilen Endeinrichtungen einen GPS-Empfänger mit, der zu dieser Zellinformation permanent den "tatsächlichen Ort" und die genaue Uhrzeit kennt. Die mit den mobilen Endeinrichtungen ausgestatteten Fahrzeuge fahren auf der Straße 19 und ermitteln damit in Echtzeit die Orte der Zellenwechsel auf dem Straßennetz.

Dazu ist vorgesehen, dass in regelmäßigen Abständen, beispielsweise alle halbe Sekunde, die Zellinformation aus dem GSM-Modem der mobilen Endeinrichtung im Fahrzeug ausgelesen wird. Bei einer Änderung dieser Zellidentifikationsdaten wird ebenfalls die Uhrzeit und die entsprechende GPS-Koordinate ermittelt. Beide Werte werden gespeichert und regelmäßig, beispielsweise einmal pro Nacht und zu verkehrsschwachen Zeiten innerhalb des Kommunikationsnetzes von den mobilen Endeinrichtungen an eine zentrale Rechnereinheit geschickt. Dort werden die Daten datentechnisch konsolidiert, beispielsweise mittels "Map Matching" auf die Karte des Straßennetzes 19 abgebildet und in die oben genannte Tabelle eingepflegt. Auf diese Weise ist zu jeder Zeit ein automatischer Abgleich des die Straße 19 überdeckenden Teils des tatsächlichen Zellenplans 18 vorhanden, wodurch beispielsweise ein automatischer Betrieb eines Verkehrserfassungssystems ermöglicht wird.

Bei einem solchen Verkehrserfassungssystem handelt es sich beispielsweise um ein Verfahren zum Erzeugen ortsspezifischer Informationsdaten in Form von Verkehrsinformationsdaten. Wie die Erzeugung derartiger Informationsdaten vonstatten geht, wird nachfolgend beschrieben.

Jeder der Zellen 11 a bis 11 d ist eine Basisstation 12 zugeordnet. Eine mobile Endeinrichtung 13, im vorliegenden Fall ein Mobiltelefon, kommuniziert in ihrem aktiven Zustand (es wird gerade ein Telefonat geführt) oder in einem Stand-By-Modus (das Gerät ist eingeschaltet, es wird jedoch kein Telefonat geführt) zumindest zeitweilig mit der zur Zelle gehörigen Basisstation, in der sich das Mobiltelefon 13 gerade befindet.

Wenn nun das Mobiltelefon 13 von einer Zelle 11a in eine Zelle 11 b überwechselt (Handover-Vorgang), findet ein Verbindungsaufbau zwischen dem Mobiltelefon 13 und der Basisstation derjenigen Zelle 11 b statt, in die das Mobiltelefon 13 eintritt. Bei der Kommunikation zwischen Mobiltelefon 13 und Basisstation 12 werden spezifische Daten des Mobiltelefons 13 übertragen, anhand derer das Mobiltelefon 13 charakterisiert werden kann.

Bei einer PKW-Stau-Ermittlung mittels der GSM (Mobilfunk) Datenauswertung wird ein Anruf des Mobiltelefons über mehrere Zellen verfolgt (beispielsweise entlang einer Autobahn) und aus den Zell-Wechsel-Vorgängen die Verkehrsgeschwindigkeit ermittelt. Dabei muss der Anruf über alle Zellen, wohin das Mobiltelefon 13 wechseln könnte, verfolgt werden. Dazu ist vorgesehen, dass aus dem Mitschnitt von spezifischen Daten 20 (beispielsweise der Abis-Daten) zwischen den Basisstationen 12 und Base-Station-Controllern (BSC) 14 aus den Handover-CHNAV-Paketen (Channel-Activation-Paketen) 21, die entsprechenden spezifischen Daten der mobilen Endeinrichtungen 13 herausgelesen und zusammen mit der aktuellen Uhrzeit und Zellidentifikationsdaten an eine Rechnereinheit 16 übertragen werden. Zu diesem Zweck sind die Base-Station-Controller 14 neben ihrer eigentlichen Verbindung mit den Mobil-Switching-Centers (MSC) 15 auch mit wenigstens einer Rechnereinheit 16 verbunden.

In der Rechnereinheit 16 werden die spezifischen Daten 20, 21 der mobilen Endeinrichtungen 13 auf den dynamischen Zellenplan 18 des Kommunikationsnetzes 10 abgebildet. Die einzelnen erzeugten beziehungsweise ermittelten Daten können zumindest zeitweilig in einer der Rechnereinheit 16 zugeordneten Speichereinrichtung 17 abgespeichert werden.

Auf diese Weise wird es möglich, jede mobile Endeinrichtung 13, die einer bestimmten Zelle 11 zugeordnet werden kann, über den Zellenplan 18 auch entsprechenden Segmenten einer Straße 19 zuzuordnen. Es wird somit möglich, für jedes Segment der Straße 19 vorherzusagen, wieviele mobile Endeinrichtungen 13 sich zu einer bestimmten Zeit auf dem Straßensegment befinden. Dadurch lassen sich beispielsweise Aussagen über die Verkehrsdichte auf der Straße 19 machen.

Sollte sich die Größe und/oder Form einer Zelle aufgrund äußerer Umstände über die Zeit verändern, kann dieser Umstand ebenfalls problemlos berücksichtigt werden, da diese Änderungen im Rahmen einer dynamischen Aktualisierung des Zellenplans 18 erfasst werden.

### Bezugszeichenliste

- 10: zellulares Kommunikationsnetz (Mobilfunknetz)
- 11a: Zelle
- 11b: Zelle
- 11c: Zelle
- 11d: Zelle
- 12: Basisstation
- 13: mobile Endeinrichtung (Mobiltelefon)
- 14: Base-Station-Controller (BSC)
- 15: Mobile-Switching-Centre (MSC)
- 16: Rechnereinheit
- 17: Speichereinrichtung
- 18: Zellenplan
- 19: Straße eines Straßennetzes
- 20: spezifische Daten einer mobilen Endeinrichtung
- 21: Handoverdaten einer mobilen Endeinrichtung

## Patentansprüche

1. Verfahren zum Erzeugen von ortsspezifischen Informationsdaten in Form von Verkehrsinformationsdaten auf der Basis von in einem zellularen Kommunikationsnetz (10) erzeugten spezifischen Daten (20, 21) aktiver oder in einem Stand-By-Betrieb befindlicher mobiler Endeinrichtungen (13), wobei das Kommunikationsnetz (10) aus einer Anzahl von Zellen (11a bis 11d) gebildet ist, wobei spezifische Daten (20, 21) der mobilen Endeinrichtungen (13) erfasst werden und wobei die Erzeugung der Informationsdaten auf der Basis der spezifischen Daten (20, 21) der mobilen Endeinrichtungen (13) erfolgt, wobei die spezifischen Daten (20, 21) der Endeinrichtungen (13) mit spezifischen Zellinformationsdaten von Zellen, die eine genaue Identifikation der Zelle möglich machen, in denen sich die mobilen Endeinrichtungen (13) befinden, verknüpft werden, **dadurch gekennzeichnet, dass** die Zellinformationsdaten auf einen dynamischen Zellenplan (18) des Kommunikationsnetzes (10) abgebildet werden, wobei der Zellenplan (18) mittels eines Verfahrens zum Erzeugen/Aktualisieren eines Zellenplans (18) automatisch erzeugt/aktualisiert wird, indem in einer Zelle befindlichen aktiven oder in einem Stand-By-Modus befindlichen mobilen Endeinrichtungen zumindest zeitweilig Zellidentifikationsdaten, die eine genaue Identifikation der Zelle möglich machen, von der Zelle übertragen und zumindest zeitweilig in den mobilen Endeinrichtungen abgespeichert werden, indem bei einem Zellenwechsel der mobilen Endeinrichtungen von der Zelle in eine nächste, benachbarte Eintrittszelle, in den mobilen Endeinrichtungen von der Eintrittszelle übertragene Zellidentifikationsdaten, die eine genaue Identifikation der Eintrittszelle möglich machen, zumindest zeitweilig abgespeichert werden, indem in vorgegebenen Zeitabständen die in den mobilen Endeinrichtungen abgelegten Zellidentifikationsdaten ausgelesen werden, indem nur dann, wenn sich die ausgelesenen Zellidentifikationsdaten ändern, mittels eines Standort-Ermittlungsverfahrens die genaue Position der mobilen Endeinrichtung ermittelt wird, wobei die Änderung der Zellidentifikationsdaten dem geographischen Ort eines Zellenwechsels entspricht, indem die ausgelesenen Zellidentifikationsdaten dann, wenn sich diese ändern, mit den ermittelten Positionsdaten der mobilen Endeinrichtung verknüpft und daraus Zellwechselortsdaten ermittelt werden und indem aus den so ermittelten Zellwechselortsdaten der Zellenplan automatisch erzeugt/aktualisiert wird, und dass die einzelnen Zellen (11a bis 11d) im dynamischen Zellenplan (18) auf die digitale Karte eines Straßennetzes (19) abgebildet werden.

2. Verfahren nach Anspruch 1, wobei das Verfahren zum dynamischen Erzeugen/Aktualisieren des Zellenplans (18) mit einer Anzahl mobiler Endeinrichtungen durchgeführt wird, die einer Teilmenge der im zellularen Kommunikationsnetz (10) befindlichen mobilen Endeinrichtungen (13) entspricht.

3. Verfahren nach einem der Ansprüche 1 oder 2, wobei die einzelnen Zellen (11a bis 11d) im Zellenplan (18) des Kommunikationsnetzes (10) mit Ortsdaten verknüpft sind.

4. System zum Erzeugen von Informationsdaten auf der Basis von in einem zellularen Kommunikationsnetz (10) erzeugten spezifischen Daten (20, 21) aktiver oder in einem Stand-By-Betrieb befindlicher mobiler Endeinrichtungen (13), wobei das Kommunikationsnetz (10) aus einer Anzahl von Zellen (11a bis 11d) gebildet ist, wobei das System Mittel zur Durchführung des Verfahrens nach einem der Ansprüche 1 bis 3 aufweist.

5. System nach Anspruch 4, **dadurch gekennzeichnet, dass** das Kommunikationsnetz (10) als zellulares Mobilfunknetz ausgebildet ist und dass die mobilen Endeinrichtungen als Mobiltelefone (13) und/oder als Onboard-Units, OBUs, und/oder als Navigationseinrichtungen in Fahrzeugen ausgebildet sind.

## Claims

1. A method of generating location specific information data in the form of traffic information data on the basis of specific data (20, 21) of mobile end terminals (13) being active or in a stand-by-mode, said specific data being generated in a cellular communications network (10), whereby the communications network (10) is formed from a number of cells (11 a to 11 d), whereby specific data (20, 21) of the mobile end terminals (13) are captured and whereby the generation of information data takes place on the basis of the specific data (20, 21) of the mobile end terminals (13), whereby the specific data (20, 21) of the end terminals (13) are linked with specific cell information data, which allow a precise identification of the cell, of cells, in which the mobile end terminals (13) are located, **characterized in that** the cell information data are mapped on a dynamic cell plan (18) of the communications network (10), whereby the cell plan (18) is automatically created/updated by means of a method of creating/update a cell plan (18), wherein to mobile end terminals located in a cell, which are active or in a stand-by-mode, cell identification data, which allow a precise identification of the cell, are at least temporarily transmitted from the cell and are stored at least temporarily in the mobile end terminals, wherein on a cell change of the mobile end terminals from the cell into a next, neighbouring entrance cell, cell identification data transmitted from the entrance cell, which allow a precise identification of the entrance cell, being at least temporarily stored in the mobile end terminals, wherein the cell identification data being stored in the mobile end terminals are read out in predetermined time intervals, wherein only then when the read out cell identification data change, the exact position of the mobile end terminals is determined by means of a location determination method, whereby the change of the cell identification data represents the geographical location of a cell change, wherein the read out cell identification data, in case they change, being linked to the determined position data of the mobile end terminal and cell change location data being determined thereof, and wherein from the thus determined cell change location data the cell plan is automatically created/updated, and that the individual cells (11a to 11d) in the dynamic cell plan (18) are mapped on the digital map of a street network (19).

2. The method according to claim 1, whereby the method for dynamically generating/updating the cell plan (18) is performed with a number of mobile end terminals, which corresponds to a subset of mobile end terminals (13) being located in the cellular communications network (10).

3. The method according to one of the claims 1 or 2, whereby the individual cells (11 a to 11d) in the cell plan (18) of the communications network (10) are linked to location data.

4. A system of generating information data on the basis of specific data (20, 21) of mobile end terminals (13) being active or in a stand-by-mode, said specific data being generated in a cellular communications network (10), said communications network (10) being formed from a number of cells (11 a to 11d), whereby the system comprises means for performing the method according to anyone of claims 1 to 3.

5. The system according to claim 4, **characterized in that** the communications network (10) is provided as a cellular mobile network and that the mobile end terminals are provided as mobile phones (13) and/or as Onboard-Units, OBUs and/or as navigation devices in vehicles.

## Revendications

1. Procédé servant à produire des données d'informations spécifiques à un site sous la forme de données d'information de trafic sur la base de données (20, 21) spécifiques, produites dans un réseau de communication (10) cellulaire, de terminaux (13) mobiles actifs ou se trouvant en mode veille, dans lequel le réseau de communication (10) est formé à partir d'un nombre donné de cellules (11a à 11d), dans lequel des données (20, 21) spécifiques des terminaux (13) mobiles sont détectées et dans lequel la production des données d'information est effectuée sur la base des données (20, 21) spécifiques des terminaux (13) mobiles, dans lequel les données (20, 21) spécifiques des terminaux (13) sont combinées à des données d'information de cellule spécifiques de cellules, qui rendent possible une identification précise de la cellule, dans lesquelles se trouvent les terminaux (13) mobiles, **caractérisé en ce que** les données d'information de cellule sont reproduites sur un plan de cellule (18) dynamique du réseau de communication (10), dans lequel le plan de cellule (18) est produit/mis à jour automatiquement au moyen d'un procédé servant à produire/mettre à jour un plan de cellule (18), des données d'identification de cellule, qui rendent possible une identification précise de la cellule, étant transmises par la cellule au moins de manière temporaire à des terminaux mobiles, actifs ou se trouvant dans un mode de veille, situés dans une cellule et étant mémorisées au moins de manière temporaire dans les terminaux mobiles, en cas d'un changement de cellule des terminaux mobiles passant de la cellule dans une cellule d'entrée qui suit voisine, des données d'identification de cellule transmises dans les terminaux mobiles par la cellule d'entrée, lesquelles rendent possible une identification précise de la cellule d'entrée, étant mémorisées au moins de manière temporaire, les données d'identification de cellule enregistrées dans les terminaux mobiles étant lues à des intervalles prédéfinis, seulement quand les données d'identification de cellule lues changent, la position précise du terminal mobile étant déterminée au moyen d'un procédé de détermination d'emplacement, dans lequel le changement des données d'identification de cellule correspond au site géographique d'un changement de cellule, les données d'identification de cellule lues, quand ces dernières changent, étant combinées aux données de position déterminées du terminal mobile et à partir de ces dernières, des données de site de changement de cellule étant déterminées et le plan de cellule étant produit/mis à jour automatiquement à partir des données de site de changement de cellule ainsi déterminées, et **en ce que** les diverses cellules (11a à 11d) dans le plan de cellule (18) dynamique sont reproduites sur la carte numérique d'un réseau routier (19).

2. Procédé selon la revendication 1, dans lequel
le procédé est effectué afin de produire/mettre à jour de manière dynamique le plan de cellule (18) avec un nombre donné de terminaux mobiles, lequel correspond à une quantité partielle des terminaux (13) mobiles situés dans le réseau de communication (10) cellulaire.

3. Procédé selon l'une quelconque des revendications 1 ou 2, dans lequel les diverses cellules (11a à 11d) sont combinées, dans le plan de cellule (18) du réseau de communication (10), aux données de site.

4. Système servant à produire des données d'information sur la base de données (20, 21) spécifiques, produites dans un réseau de communication (10) cellulaire, de terminaux (13) mobiles actifs ou se trouvant dans un mode de veille, dans lequel le réseau de communication (10) est formé à partir d'un nombre donné de cellules (11a à 11d), dans lequel le système présente des moyens servant à mettre en oeuvre le procédé selon l'une quelconque des revendications 1 à 3.

5. Système selon la revendication 4, **caractérisé en ce que** le réseau de communication (10) est réalisé sous la forme d'un réseau de téléphonie mobile cellulaire, et **en ce que** les terminaux mobiles sont réalisés sous la forme de téléphones mobiles (13) et/ou sous la forme d'unités embarquées (OBU) et/ou sous la forme de systèmes de navigation dans des véhicules.
